(19) Europäisches Patentamt
European Patent Office
Office européen des brevets

(11) EP 4 410 409 A1

(12) EUROPEAN PATENT APPLICATION
published in accordance with Art. 153(4) EPC

(43) Date of publication:
07.08.2024 Bulletin 2024/32

(51) International Patent Classification (IPC):
B01D 67/00 (2006.01)    B01D 71/26 (2006.01)
H01M 50/403 (2021.01)    H01M 50/417 (2021.01)

(21) Application number: 22895790.8

(22) Date of filing: 25.07.2022

(52) Cooperative Patent Classification (CPC):
B01D 67/00; B01D 71/26; H01M 50/403;
H01M 50/417; Y02E 60/10

(86) International application number:
PCT/KR2022/010877

(87) International publication number:
WO 2023/090580 (25.05.2023 Gazette 2023/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 17.11.2021 KR 20210158598

(71) Applicants:
• W-Scope Korea Co., Ltd.
Cheongju-si, Chungcheongbuk-do 28122 (KR)
• W-Scope Chungju Plant Co., Ltd.
Daesowon-myeon
Chungju-si, Chungcheongbuk-do
27461 (KR)

(72) Inventors:
• KIM, Byung Hyun
Chungcheongbuk-do 28121 (KR)
• PARK, Pyung Yong
Cheongju-si, Chungcheongbuk-do 28123 (KR)
• CHO, Kuk Jin
Seoul 07069 (KR)
• CHOI, Yeong Hoon
Cheongju-si, Chungcheongbuk-do 28121 (KR)
• LEE, Ju Ho
Chungcheongbuk-do 28121 (KR)
• CHOI, Kwang Ho
Cheongju-si, Chungcheongbuk-do 28113 (KR)

(74) Representative: BCKIP Part mbB
Siegfriedstraße 8
80803 München (DE)

(54) **METHOD FOR MANUFACTURING SEPARATOR**

(57) The present invention provides a method of manufacturing a separator, which includes: (a) manufacturing a base film by extruding and stretching a composition that includes a cross linkable polyolefin in which a silane-based compound is grafted to a first polyolefin, a non-cross linkable polyolefin consisting of a second polyolefin, and a pore-forming agent;; (b) applying a crosslinking catalyst to the surface of the base film while extracting the pore-forming agent from the base film by applying a solution including the crosslinking catalyst and an extraction solvent to the base film; and (c) crosslinking the cross linkable polyolefin while removing the extraction solvent remaining on the base film by applying heat and steam to the base film.

[FIG. 1]

| EXTRACTION AND STRETCHING OF RAW MATERIAL COMPOSITION |
| --- |

| EXTRACTION OF PORE-FORMING AGENT AND APPLICATION OF CROSSLINKABLE CATALYST (SINGLE PROCESS) |
| --- |

| DRYING AND CROSSLINKING (SINGLE PROCESS) |
| --- |

| HEAT SETTING |
| --- |

**Description**

[Technical Field]

The present invention relates to a method of manufacturing a separator, and more particularly, to a method of manufacturing a porous separator for a lithium secondary battery.

[Background Art]1

Lithium secondary batteries are widely used as a power source for various types of electrical products that require miniaturization and a light weight, such as smartphones, notebooks, tablets, PCs, etc., and as the application area expands to smart grids and medium-to-large batteries for electric vehicles, the development of a lithium secondary battery with large capacity, a long lifespan, and high stability is required.

As a mean for achieving the above purpose, research and development is being actively conducted on separators in which micropores that separate a positive electrode and a negative electrode to prevent an internal short and facilitate the movement of lithium ions during charging/discharging are formed, and particularly, microporous separators using a polyolefin such as polyethylene that is advantageous for forming pores by thermally induced phase separation, economical, and easily satisfying the physical properties required for separators.

However, a separator that uses polyethylene having a low melting point of 135 °C may be subjected to shrinkage deformation at high temperatures above the melting point due to heat generation from the battery. When a short circuit occurs due to such deformation, thermal runaway of the battery may occur, resulting in safety problems such as ignition. To solve this problem, a method of improving heat resistance by crosslinking a polyolefin separator has been proposed.

Japanese Laid-Open Publication Nos. 11-144700 and 11-172036 disclose inventions relating to manufacturing a crosslinking separator using a silane-modified polyolefin to enhance heat resistance. However, since the physical properties of the manufactured separator, including a thickness of 25 $\mu$m, an air permeability of 900 sec/100 mL, and a puncture strength of 200 gf, are extremely inferior to the physical property levels of currently commercialized separators, including a thickness of 12 $\mu$m or less, an air permeability of 150 sec/100 mL or less, and a puncture strength of 250 gf or more, it is impossible to practically commercialize such separators.

Japanese Patent No. 4583532 discloses a method of manufacturing a separator by mixing ultra high molecular weight polyethylene having a weight average molecular weight of 50,000 or more with a silane-modified polyolefin. However, the ultra-high molecular weight polyethylene has a disadvantage of poor dispersibility with the silane-modified polyolefin. Accordingly, a discard rate is high due to variations in the manufactured separators, and the silane-cross linkable polyolefin is concentrated in some regions, making it impossible to obtain a separator with uniform physical properties.

Korean Patent No. 1857156 and Korean Unexamined Patent Publication No. 10-2021-0001785 disclose methods of manufacturing a polyolefin separator by stretching, extracting and crosslinking after preparing a silane-grafted polyolefin solution by inputting and mixing a polyolefin, a diluent, an alkoxy group-containing vinyl silane and an initiator in an extruder and subjecting the solution to reactive extrusion. However, during reactive extrusion, the alkoxy group-containing vinyl silane is grafted to the diluent, making it impossible to recycle the diluent, and there is a problem of eluting the unreacted alkoxy group-containing vinyl silane during extrusion, which worsens productivity and economic feasibility.

Particularly, Korean Unexamined Patent Publication No. 10-2021-0001785 discloses that productivity can be improved by performing a series of steps including applying a crosslinking catalyst to a film from which a pore-forming agent is extracted and removed, and applying water and/or steam to crosslink the film in an in-line process to reduce the time and costs required for crosslinking a separator. However, since the steps and equipment constituting such an in-line process are independent and separate from each other, it is difficult to improve productivity beyond a certain level, and the time required for crosslinking to achieve a predetermined meltdown temperature is also unclear, there are limitations in quantifying the degree of improvement in productivity.

Korean Patent No. 1955911 discloses a method of manufacturing a separator that crosslinks a silane-modified polyolefin included in a porous membrane, and a separator manufactured thereby. However, the crosslinking according to the above manufacturing method is performed in the presence of moisture, and the time required for crosslinking is at least 10 minutes, which is a limitation on achieving further productivity, and there is a problem that the trade-off between the mechanical properties and heat resistance of the separator cannot be properly resolved. In addition, when manufacturing such a separator, defects that deteriorate the surface quality of a product due to side reactions including a crosslinking reaction between a silane-modified polyolefin and a matrix resin are generated, and there is a problem in which such defects impair the mobility of ions during battery operation, thereby deteriorating the electrochemical properties of the battery.

[Disclosure]

[Technical Problem]

To address the above-described problems of the related art, the present invention is directed to providing a method of manufacturing a separator, which can realize mechanical properties and heat resistance in a balanced manner and significantly improve productivity by reducing the time required for crosslinking and other processes for achieving the required levels of mechanical properties and heat resistance.

[Technical Solution]

One aspect of the present invention provides a method of manufacturing a separator, which includes (a) manufacturing a base film by extruding and stretching a composition that includes a cross linkable polyolefin in which a silane-based compound is grafted to a first polyolefin, a non-cross linkable polyolefin consisting of a second polyolefin, and a pore-forming agent; (b) applying a crosslinking catalyst to the surface of the base film while extracting the pore-forming agent from the base film by applying a solution including the crosslinking catalyst and an extraction solvent to the base film; and (c) crosslinking the cross linkable polyolefin while removing the extraction solvent remaining on the base film by applying heat and steam to the base film.

In one embodiment, the weight average molecular weights (Mw) of the first and second polyolefins may be 1,000 to 300,000 and 300,000 to 2,000,000, respectively, and the ratio of the weight average molecular weight (Mw) of the first polyolefin to that of the second polyolefin may be 0.0005 to 1.

In one embodiment, each of the first and second polyolefins may be one selected from the group consisting of polyethylene, polypropylene, polybutylene, polymethylpentene, ethylene vinyl acetate, ethylene butyl acrylate, ethylene ethyl acrylate, and a combination of two or more thereof.

In one embodiment, the silane-based compound may be an alkoxy group-containing vinyl silane.

In one embodiment, the content of the cross linkable polyolefin and the non-cross linkable polyolefin may be 5 to 90 wt%.

In one embodiment, the content of the silane-based compound in the cross linkable polyolefin may be 10 to 50 wt%.

In one embodiment, in (c), while applying heat by contacting at least one surface of the base film with a heating member having a first temperature, steam having a second temperature may be applied to at least one surface of the base film using a spraying member.

In one embodiment, the first temperature may be 40 to 70 °C, and the second temperature may be 80 to 200 °C.

In one embodiment, the spraying member may be provided at at least one of the inside and the outside of the heating member.

Another aspect of the present invention provides a separator manufactured by the above-described method, wherein, at 1 hour after the initiation of (c), a meltdown temperature of the separator, which is a temperature at which the separator melts and fractures, measured by applying a force of 0.01 N in the machine direction (MD) and the transverse direction (TD) of the separator using a thermomechanical analyzer (TMA) and then raising the temperature at a rate of 5 °C/min is 200 to 300 °C.

[Advantageous Effects]

A method of manufacturing a separator according to one aspect of the present invention includes a process of applying a crosslinking catalyst and an extraction solvent to a base film, and a process of drying and crosslinking the base film, which are performed independently, thereby realizing mechanical properties and heat resistance in a balanced manner, and significantly improving productivity by reducing the time required for crosslinking and other processes for achieving the required levels of mechanical properties and heat resistance.

It should be understood that the effects of the present invention are not limited to the above-described effects and include all effects that can be deduced from the configuration of the present invention described in the detailed description or claims of the present invention.

[Description of Drawings]

FIG. 1 illustrates a method of manufacturing a separator according to one embodiment of the present invention.
FIG. 2 illustrates a single process for drying and crosslinking according to one embodiment of the present invention.

[Modes of the Invention]

Hereinafter, embodiments of the present invention will be described in detail with reference to the accompanying drawings so that those of ordinary skill in the art can easily carry out the present invention. However, the present invention may be implemented in a variety of different forms and is not limited to the embodiments described herein. In addition, to clearly explain the present invention in the drawings, parts that are not related to the description are omitted, and like numerals denote like parts throughout the specification.

Throughout the specification, when a part is "connected" to another part, it means that the one part is "directly connected," or "indirectly connected" with a third member therebetween. In addition, when a certain part "includes" a certain component, it means that, unless particularly stated otherwise, another component may be further included rather than excluded.

Hereinafter, embodiments of the present invention will be described in detail with reference to the accompanying drawings.

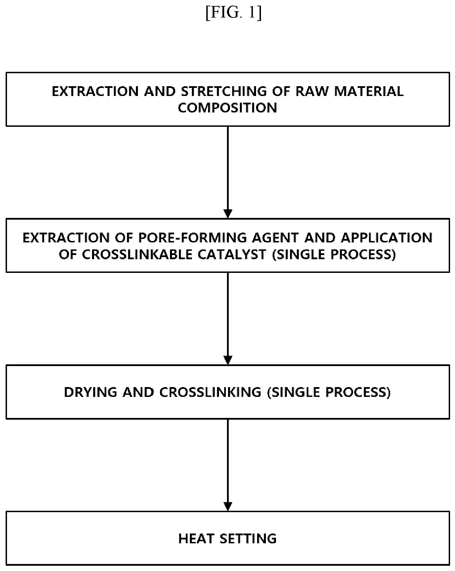

FIG. 1 illustrates a method of manufacturing a separator according to one embodiment of the present invention. Referring to FIG. 1, the method of manufacturing a separator according to one embodiment of the present invention may include (a) manufacturing a base film by extruding and stretching a composition that includes a cross linkable polyolefin in which a silane-based compound is grafted to a first polyolefin, a non-cross linkable polyolefin consisting of a second polyolefin, and a pore-forming agent; (b) applying a crosslinking catalyst to the surface of the base film while extracting the pore-forming agent from the base film by applying a solution including the crosslinking catalyst and an extraction solvent to the base film; and (c) crosslinking the cross linkable polyolefin while removing the extraction solvent remaining on the base film by applying heat and steam to the base film.

In (a), a base film may be manufactured by extruding a composition including a cross linkable polyolefin in which a silane-based compound is grafted to a first polyolefin, a non-cross linkable polyolefin consisting of a second polyolefin, and a pore-forming agent through a T-die, and then stretching it.

The cross linkable polyolefin may be prepared by reacting a first polyolefin having a weight average molecular weight (Mw, g/mol) of 1,000 to 300,000, preferably 1,000 to 200,000, and more preferably 4,000 to 100,000, and a polydispersity index (Mw/Mn) of 3 to 7, a silane-based compound, and an initiator, and the amounts and proportions of the reactants may be adjusted such that the content of the silane-based compound in the cross linkable polyolefin is 10 to 50 wt%.

The non-cross linkable polyolefin may consist of a second polyolefin that has a weight average molecular weight (Mw) of 300,000 to 2,000,000, preferably 300,000 to 1,000,000, and more preferably 300,000 to 700,000, and a polydispersity index (Mw/Mn) of 3 to 7.

When the polydispersity indices of the first and second polyolefins are less than 3, the dispersibility with the pore-forming agent may be degraded, which degrades the uniformity of the manufactured separator, and when the polydispersity indices of the first and second polyolefins are more than 7, the mechanical properties of the separator may be degraded.

The ratio of the weight average molecular weight (Mw) of the first polyolefin to that of the second polyolefin may be 0.0005 to 1, preferably 0.001 to 0.7, and more preferably 0.001 to 0.5. When the ratio of the weight average molecular weight (Mw) of the first polyolefin to that of the second polyolefin is outside the above range, as the compatibility and dispersibility of the cross linkable polyolefin and the non-cross linkable polyolefin are degraded, the variation in mechanical properties depending on the region of the separator increases, which may degrade the reliability and reproducibility of a product.

The first and second polyolefins may each be one selected from the group consisting of polyethylene, polypropylene, polybutylene, polymethylpentene, ethylene vinyl acetate, ethylene butyl acrylate, ethylene ethyl acrylate, and a combination of two or more thereof, preferably polyethylene and/or polypropylene, and more preferably polyethylene, but the present invention is not limited thereto.

The silane-based compound may be an alkoxy group-containing vinyl silane. The alkoxy group-containing vinyl silane may be, for example, one selected from trimethoxyvinylsilane, triethoxyvinylsilane, triacetoxyvinylsilane, 3-(methacryloxypropyl)trimethoxysilane, and a combination of two or more thereof, and preferably trimethoxyvinylsilane, but the present invention is not limited thereto.

The pore-forming agent may be one selected from paraffin oil, paraffin wax, mineral oil, solid paraffin, soybean oil, rapeseed oil, palm oil, coconut oil, di-2-ethylhexylphthalate, dibutyl phthalate, diisononyl phthalate, diisodecyl phthalate, bis(2-propylheptyl)phthalate, naphthene oil, and a combination of two or more thereof, preferably paraffin oil, and more preferably paraffin oil having a kinematic viscosity at 40 °C of 50 to 100 cSt, but the present invention is not limited thereto.

The composition may include 1 to 40 wt% of the cross linkable polyolefin, 1 to 40 wt% of the non-cross linkable polyolefin, and 40 to 80 wt% of the pore-forming agent. When the content of the cross linkable polyolefin in the composition is less than 1 wt%, it is impossible to realize the required level of mechanical properties due to the suppression of a crosslinking reaction, and when the content of the cross linkable polyolefin in the composition is more than 40 wt%, it is difficult to realize the physical properties required for a commercial separator.

The stretching may be performed by a known method such as uniaxial stretching or biaxial stretching (sequential or simultaneous biaxial stretching). For sequential biaxial stretching, a stretching ratio may be 4 to 20 times in the machine direction (MD) and transverse direction (TD), and a surface magnification corresponding thereto may be 16 to 400 times.

In (b), the pore-forming agent may be extracted from the base film by applying a single solution containing a crosslinking catalyst and an extraction solvent to the base film, and at the same time, the crosslinking catalyst may also be applied to the surface (the surface of internal and external pores) of the base film.

The extraction solvent may selectively extract and remove the pore-forming agent from the base film. The extraction solvent may be, for example, methyl ethyl ketone, hexane, or dichloromethane, but the present invention is not limited thereto.

The pore-forming agent may be extracted and removed by immersing the base film in an immersion tank that contains a solution containing the extraction solvent for predetermined time. After extraction, the content of the pore-forming agent remaining on the surface and/or the inside of the base film may be 1 wt% or less.

The solution may include the extraction solvent and the crosslinking catalyst. This solution may promote crosslinking in subsequent (c) by further including a crosslinking catalyst. As such a crosslinking catalyst, generally, a carboxylate, organic base, inorganic acid, or organic acid of a metal such as tin, zinc, iron, zinc, or cobalt may be used. For example, the crosslinking catalyst may be dibutyltin dilaurate, dibutyltin diacetate, stannous acetate, stannous caprylate, zinc naphthenate, zinc caprylate, cobalt naphthenate, ethyl amine, dibutyl amine, hexyl amine, pyridine, an inorganic acid such as sulfuric acid or hydrochloric acid, an organic acid such as toluene sulfonic acid, citric acid, stearic acid, or maleic acid, or 1,8-diazabicyclo(5,4,0)undec-7-ene), and preferably dibutyltin dilaurate, but the present invention is not limited thereto.

The crosslinking catalyst has been conventionally applied by a method such as addition in the production of a cross linkable polyolefin, or application of a separately prepared crosslinking catalyst solution to a base film. However, with the conventional method, it is difficult to uniformly disperse the crosslinking catalyst along with the cross linkable polyolefin. As described above, before crosslinking, it is necessary to uniformly disperse the cross linkable polyolefin included in the base film, and here, it is also necessary to uniformly disperse a crosslinking catalyst involved in the crosslinking of the cross linkable polyolefin.

In this regard, a single solution prepared by pre-mixing the crosslinking catalyst with the extraction solvent may be applied to extract and remove the pore-forming agent from the base film and apply the crosslinking catalyst to the base film, which allows the crosslinking catalyst may be filled *in-situ* not only on the surface of the base film but also into pores formed by the extraction and removal of the pore-forming agent, resulting in effective permeation and introduction into the base film. The crosslinking catalyst introduced uniformly on the surface and into the base film may contribute to improving the heat resistance and mechanical properties of the separator by ensuring that the crosslinking of the cross linkable polyolefin occurs uniformly in all directions and areas thereof.

The content of the crosslinking catalyst in the solution may be 0.01 to 5 wt%. When the content of the crosslinking catalyst is less than 0.01 wt%, the crosslinking cannot be promoted to the required level, and when the content of the crosslinking catalyst in the solution is more than 5 wt%, the reaction rate converges to the required level, which is disadvantageous in terms of economic feasibility and productivity.

In (b), the time required for extraction and removal of the pore-forming agent and application of the crosslinking catalyst may be determined by the thickness and porosity of the base film. However, when the thickness and porosity of the base film are 10 to 30 $\mu$m and 40 to 60 vol%, respectively, the time may be 10 minutes or less, preferably 5 minutes or less, and more preferably 1 minute or less.

In (c), the cross linkable polyolefin may be crosslinked while the extraction solvent remaining on the base film is removed by applying heat and steam to the base film from which the pore-forming agent is extracted and to which the crosslinking catalyst is applied.

Some of the extraction solvent applied in (b) may remain on the surface and/or in the base film. Since the remaining extraction solvent may deteriorate a subsequence process and the physical properties of the manufactured separator, the extraction solvent remaining in the base film may be removed by appropriately heating the base film to a temperature above the boiling point of the extraction solvent.

In (c), the steam applied with heat to at least one surface of the base film may activate the crosslinking catalyst applied to the base film in (b) to initiate and promote crosslinking of the cross linkable polyolefin included in the base film. In addition, the inherent heat of the steam may contribute to removing the extraction solvent remaining in the base film.

The heat and steam applied simultaneously in (c) may remove the extraction solvent remaining in the base film, and the steam may activate the crosslinking catalyst applied to the base film to initiate and promote crosslinking of the cross linkable polyolefin included in the base film.

Particularly, by simultaneously removing the extraction solvent and activating the crosslinking catalyst, the random loss of some of the crosslinking catalyst along with the extraction solvent due to heat may be prevented, which may ensure that 95 wt% or more, preferably 99 wt% or more, and more preferably the total amount of the crosslinking catalyst applied to the surface (the surface of internal and external pores) of the base film participates in the crosslinking of the cross linkable polyolefin in (b). That is, in (c), since the removal of the extraction solvent and the crosslinking of the cross linkable polyolefin may be performed simultaneously in a single process, the heat resistance and productivity of the separator may be improved in a balanced manner.

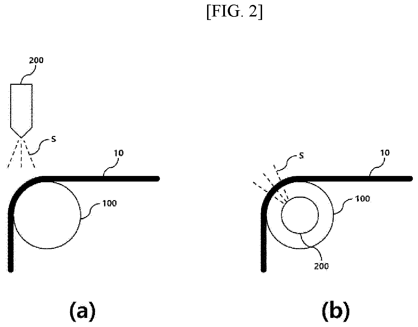

FIG. 2 illustrates a single process for drying and crosslinking according to one embodiment of the present invention. Referring to FIG. 2, in (c), while applying heat by contacting at least one surface of the base film 10 with a heating member 100 having a first temperature, steam S having a second temperature may be applied to at least one surface of the base film using a spraying member 200.

The heating member 100 may be a thermally conductive member that can come into contact with at least one surface of the base film 10 to transfer a certain amount of heat to the base film 10. The thermally conductive member may be, for example, a fixed panel or rotating roll made of metal, but the present invention is not limited thereto. When the heating member 100 is a roll, the rotation speed of the roll may be adjusted such that the base film 10 moves in the machine direction (MD) at a speed of 5 to 100 m/min, preferably 10 to 80 m/min, and more preferably 15 to 50 m/min.

The extraction solvent remaining in the base film 10 may be removed by evaporation from the base film 10 due to the transferred heat. The temperature of the heating member 100 required for removing the extraction solvent, that is, the first temperature, may be 40 to 70 °C.

The spraying member 200 may be provided at at least one of the inside and outside of the heating member 100, and the spraying member 200 may include a heater that generates steam having the second temperature by heating water and a nozzle that sprays the generated steam to a preset location. The second temperature may be adjusted within a range that is required to activate the crosslinking catalyst and initiate crosslinking of the cross linkable polyolefin, e.g., 80 to 200 °C, and preferably 100 to 150 °C.

Referring to FIG. 2A, the spraying member 200 may be separately provided outside the heating member 100. The steam (S) may be directly applied to at least one surface of the base film 10 by spraying toward at least one surface of the base film 10. The steam may be retained in a predetermined space to ensure that at least one surface of the base film 10 is exposed to the retained steam, the steam may be applied to at least one surface of the base film 10 by combining the two.

Referring to FIG. 2B, the spraying member 200 may be built into the heating member 100. In this case, the steam S may be sprayed toward at least one surface of the base film 10 to be directly applied to the contact surface between the heating member 100 and the base film 10. The steam S applied to the contact surface of the base film 10 may penetrate the base film 10 in a thickness direction through pores of the base film 10. In this process, since the crosslinking catalyst applied to the internal pores of the base film 10 may also be activated appropriately by the steam S, the heat resistance and mechanical properties of the manufactured separator may be further improved.

The separator manufactured by the above method may include a crosslinked product of the cross linkable polyolefin and the non-cross linkable polyolefin. The crosslinked product may be uniformly dispersed in the non-cross linkable polyolefin, and the crosslinked product may be formed by crosslinking at least some of the silane-based compound that is grafted to the main chain of the cross linkable polyolefin under certain conditions.

Among the cross linkable polyolefin and the non-cross linkable polyolefin, which constitutes the separator, the content of the cross linkable polyolefin may be 5 to 90 wt%, preferably 5 to 50 wt%, and more preferably 10 to 50 wt%. When the content of the cross linkable polyolefin is less than 5 wt%, the required level of meltdown temperature may not be realized, and when the content of the cross linkable polyolefin is more than 90 wt%, the brittleness of the separator may increase, leading to a decrease in tensile strength.

The content of the silane-based compound in the cross linkable polyolefin may be 10 to 50 wt%. When the content of the silane-based compound in the cross linkable polyolefin is less than 10 wt%, the required level of meltdown temperature may not be realized, and when 5 the content of the silane-based compound in the cross linkable polyolefin is more than 50 wt%, the brittleness of the separator increases, which may not only decrease tensile strength, but also excessive oil vapor may be generated in the manufacture of the separator, resulting in degradation of processability and workability.

At 1 hour after the initiation of (c), a meltdown temperature of the separator, which is a temperature at which the separator melts and fractures, measured by applying a force of 0.01N in the machine direction (MD) and the transverse direction (TD) of the separator using a thermomechanical analyzer (TMA) and then raising the temperature at a rate of 5 °C/min is 200 to 300 °C.

In the separator, the crosslinked product of the cross linkable polyolefin and the non-cross linkable polyolefin may constitute discontinuous and continuous phases, respectively. In the separator, the cross linkable polyolefin may be crosslinked in a continuous phase matrix consisting of the non-cross linkable polyolefin to firmly support and fix the matrix, thereby enhancing the heat resistance and mechanical properties of the separator.

The term "matrix" used herein refers to a component that constitutes a continuous phase in a separator containing two or more components. That is, in the separator, the non-cross linkable polyolefin is present in the form of a continuous phase, and the crosslinked product of the cross linkable polyolefin may be present in a discontinuous form therein.

In the process of manufacturing a conventional separator including a polyolefin and a cross linkable compound, such as a silane-based compound, a method of manufacturing a crosslinked separator by applying and then grafting a silane-based compound to a base sheet before the extraction of a pore-forming agent, or pre-mixing a polyolefin and a silane-based compound and then grafting the resulting mixture has been tried. In this case, the physical properties of a commercial separator are satisfactory, but there is a disadvantage of grafting the silane-based compound with other components and/or compositions as well as a polyolefin, and these components and/or compositions are discarded in each process, resulting in a rapid increase in manufacturing costs.

Since the crosslinking of the cross linkable polyolefin is performed simultaneously with drying in a series of processes including extrusion, stretching, extraction, and drying, it is necessary to uniformly control the distribution of the cross linkable polyolefin in a porous membrane from which the pore-forming agent is extracted so that the crosslinked product is uniformly distributed in the separator. When the crosslinking of the cross linkable polyolefin occurs only in a partial region of the separator, it is impossible to achieve the required level of mechanical properties, and particularly, the variation in mechanical properties depending on the region of the separator increases, which significantly degrades the reliability and reproducibility of a product.

As described above, in the separator having a structure in which a crosslinked product of the cross linkable polyolefin in which a silane-based compound is grafted to the first polyolefin is dispersed in the non-cross linkable polyolefin containing the second polyolefin, the content of the crosslinked product in the separator, the content of the silane-based compound in the cross linkable polyolefin, and/or the weight average molecular weights of the first and second polyolefins and their ratio may be adjusted, and/or a process of applying a crosslinking catalyst and an extraction solvent to the base film and a process of drying and crosslinking the base film are performed in separate processes in (b) and (c), thereby achieving mechanical properties and heat resistance in a balanced manner, and significantly improving productivity by reducing the time required for crosslinking and other processes for achieving the required levels of mechanical properties and heat resistance.

For example, at one hour after the initiation of (c), a meltdown temperature of the separator, which is a temperature at which the separator melts and fractures, measured by applying a force of 0.01N in the machine direction (MD) and the transverse direction (TD) of the separator using a thermomechanical analyzer (TMA) and then raising the temperature at a rate of 5 °C/min may be 200 to 300 °C, preferably 205 to 280 °C, and more preferably 230 to 260 °C. That is, since the time required for the drying and crosslinking processes in (c) is shortened to less than 1 hour while the meltdown temperature of the separator may be raised to over 200 °C, the heat resistance and mechanical properties of the separator may be realized in a balanced manner.

In addition, the separator may satisfy one or more of the following conditions (i) to (viii): (i) tensile strength in the machine direction (MD): 2,000 kgf/cm$^2$ or more, preferably 2,000 to 2,500 kgf/cm$^2$; (ii) tensile strength in the transverse direction (TD): 2,000 kgf/cm$^2$ or more, preferably, 2,000 to 2,500 kgf/cm$^2$; (iii) tensile elongation in the machine direction (MD): 90% or more, preferably 90 to 150%; (iv) ) tensile elongation in the transverse direction (TD): 100% or more, preferably 100 to 150%; (v) heat shrinkage rate at 130 °C in machine direction (MD): 10% or less, preferably 2 to 10%; (vi) heat shrinkage rate at 130 °C in the transverse direction (TD): 10% or less, preferably 2 to 10%; (vii) puncture strength: 300 gf or more, preferably 340 gf or more; (viii) number of surface defects (white dots and/or black dots) on the surface of the separator, which have a brightness that differs from the surroundings and a size of 2 mm or more: 20/m$^2$ or less, preferably 15/m$^2$ or less.

Meanwhile, after (c), (d) heat-setting the crosslinked base film may be further included. Heat setting fixes the film and applies heat to forcibly hold the film that is about to shrink and remove residual stress. A high heat-setting temperature is advantageous for lowering the shrinkage rate, but when the temperature is excessively high, the film may partially melt and close the formed pores, reducing permeability.

The heat-setting temperature is preferably selected in the range in which 10 to 30 wt% of the crystalline part of the film melts. When the heat-setting temperature is selected within the above range, it is possible to prevent a problem of not removing residual stress in the film due to the insufficient rearrangement of polyolefin molecules in the film and a problem of reducing permeability due to pores being closed by partial melting.

When the cross linkable polyolefin is crosslinked, the crystallinity of the separator may be reduced, leading to an increase in the amorphous region. Therefore, the heat-setting temperature may be lowered below its conventional range. For example, the heat-setting temperature may be 120 to 140 °C, and preferably 123 to 135 °C, and the heat-setting time may be 5 seconds to 1 minute.

Hereinafter, examples of the present invention will be described in detail.

Preparation Example 1

High-density polyethylene having a weight average molecular weight (Mw) of 4,000 g/mol, a density of 0.98 g/mL, a crystallinity of 85%, and a melting point of 126 °C was slowly added into a 2L round flask container preheated to 200 °C and melted while stirring to prepare a liquid state, and then trimethoxyvinylsilane was slowly added. The input ratio (weight ratio) of the high-density polyethylene and trimethoxyvinylsilane was 90 : 10.

After preparing a solution in which the high-density polyethylene and trimethoxyvinylsilane was completely melted, 2,5-dimethyl-2,5-di(tert-butylperoxy)hexane as an initiator for the grafting reaction of trimethoxyvinylsilane was slowly added and stirred for 1 hour, thereby preparing trimethoxyvinylsilane-grafted high-density polyethylene (hereinafter, "silane-modified PE").

Preparation Example 2

High-density polyethylene having a weight average molecular weight (Mw) of 8,000 g/mol, a density of 0.97 g/mL, a crystallinity of 84%, and a melting point of 127 °C was slowly added into a 2L round flask container preheated to 200 °C and melted while stirring to prepare a liquid state, and then trimethoxyvinylsilane was slowly added. The input ratio (weight ratio) of the high-density polyethylene and trimethoxyvinylsilane was 90 : 10.

After preparing a solution in which the high-density polyethylene and trimethoxyvinylsilane was completely melted, 2,5-dimethyl-2,5-di(tert-butylperoxy)hexane as an initiator for the grafting reaction of trimethoxyvinylsilane was slowly added and stirred for 1 hour, thereby preparing trimethoxyvinylsilane-grafted high-density polyethylene (hereinafter, "silane-modified PE"). Here, 1 part by weight of the initiator was added based on 100 parts by weight of the trimethoxyvinylsilane. Silane-modified PE powder was prepared by sufficiently cooling the silane-modified PE to room temperature and crushing the same.

Preparation Example 3

High-density polyethylene having a weight average molecular weight (Mw) of 11,000 g/mol, a density of 0.97 g/mL, a crystallinity of 83%, and a melting point of 128 °C was slowly added into a 2L round flask container preheated to 200 °C and melted while stirring to prepare a liquid state, and then trimethoxyvinylsilane was slowly added. The input ratio (weight ratio) of the high-density polyethylene and trimethoxyvinylsilane was 90 : 10.

After preparing a solution in which the high-density polyethylene and trimethoxyvinylsilane was completely melted, 2,5-dimethyl-2,5-di(tert-butylperoxy)hexane as an initiator for the grafting reaction of trimethoxyvinylsilane was slowly added and stirred for 1 hour, thereby preparing trimethoxyvinylsilane-grafted high-density polyethylene (hereinafter, "silane-modified PE"). Here, 1 part by weight of the initiator was added based on 100 parts by weight of the trimethoxyvinylsilane.

Preparation Example 4

54.5 parts by weight of high-density polyethylene having a weight average molecular weight (Mw) of 100,000, and a polydispersity index (Mw/Mn) of 5, 30 parts by weight of paraffin oil having a kinematic viscosity at 40 °C of 70 cSt, 15 parts by weight of trimethoxyvinylsilane, and 0.5 parts by weight of dicumyl peroxide were mixed and put into a twin-screw extruder (inner diameter: 58 mm, L/D=56). The resulting product was discharged from the twin-screw extruder into a multi-strand die with a 5-mm diameter at 200 °C and a screw rotation speed of 160 rpm, and then passed through a water bath and a pelletizer, thereby preparing trimethoxyvinylsilane-grafted high-density polyethylene (hereinafter, "silane-modified PE").

Preparation Example 5

54.5 parts by weight of high-density polyethylene having a weight average molecular weight (Mw) of 200,000, and a polydispersity index (Mw/Mn) of 5, 30 parts by weight of paraffin oil having a kinematic viscosity at 40 °C of 70 cSt, 15 parts by weight of trimethoxyvinylsilane, and 0.5 parts by weight of dicumyl peroxide were mixed and put into a twin-screw extruder (inner diameter: 58 mm, L/D=56). The resulting product was discharged from the twin-screw extruder into a multi-strand die with a 5-mm diameter at 200 °C and a screw rotation speed of 160 rpm, and then passed through a water bath and a pelletizer, thereby preparing trimethoxyvinylsilane-grafted high-density polyethylene (hereinafter, "silane-modified PE").

Preparation Example 6

54.5 parts by weight of high-density polyethylene having a weight average molecular weight (Mw) of 300,000, and a polydispersity index (Mw/Mn) of 5, 30 parts by weight of paraffin oil having a kinematic viscosity at 40 °C of 70 cSt, 15 parts by weight of trimethoxyvinylsilane, and 0.5 parts by weight of dicumyl peroxide were mixed and put into a twin-screw extruder (inner diameter: 58 mm, L/D=56). The resulting product was discharged from the twin-screw extruder into a multi-strand die with a 5-mm diameter at 200 °C and a screw rotation speed of 160 rpm, and then passed through a water bath and a pelletizer, thereby preparing trimethoxyvinylsilane-grafted high-density polyethylene (hereinafter, "silane-modified PE").

Example 1

38 parts by weight of high-density polyethylene having a weight average molecular weight (Mw) of 350,000 and a polydispersity index (Mw/Mn) of 5, 2 parts by weight of the silane-modified PE obtained in Preparation Example 1, and 0.5 parts by weight of an antioxidant were mixed and put into a twin-screw extruder (inner diameter: 58 mm, L/D=56) using a quantitative feeder, and 59.5 parts by weight of paraffin oil having a kinematic viscosity at 40 °C of 70 cSt was added to a side injector. The resulting product was discharged from the twin-screw extruder into a T-die with a width of 400 mm at a screw rotation speed of 40 rpm and 200 °C and passed through a casting roll whose temperature is 40 °C, thereby manufacturing a base sheet with a thickness of 1,000 $\mu$m.

A base film was manufactured by stretching the base sheet 6 times in the machine direction (MD) using a roll stretching machine at 110 °C and stretching 7 times in the transverse direction (TD) in a tenter stretching machine at 125 °C. The base film was immersed in an immersion tank containing a dichloromethane solution such that the concentration of dibutyltin dilaurate and the temperature were adjusted to 0.5 wt% and 40 °C, respectively, to extract and remove paraffin oil from the base film, and dibutyltin dilaurate was also applied to the surface (the surface of internal and external pores) of the base film.

One surface of the base film to which dibutyltin dilaurate was applied was brought into contact with a rotating roll preheated to 50 °C to remove dichloromethane remaining in the base film, and at the same time, 110 °C steam was sprayed toward the other surface of the base film from a nozzle installed opposite the roll, thereby crosslinking the silane-modified PE in the base film. The rotation speed of the roll was adjusted such that the base film moved at a speed of 20 m/min in the machine direction (MD). The crosslinked base film was heated to 125 °C in a tenter stretching machine, stretched 1.2 times in the transverse direction (TD), and then relaxed and heat-set to 0.9 times the size before stretching, thereby preparing a separator.

Example 2

A separator was manufactured in the same manner as in Example 1, except that the silane-modified PE obtained in Preparation Example 1 was replaced with the silane-modified PE obtained in Preparation Example 2.

Example 3

A separator was manufactured in the same manner as in Example 1, except that the silane-modified PE obtained in Preparation Example 1 was replaced with the silane-modified PE obtained in Preparation Example 3.

Example 4

A separator was manufactured in the same manner as in Example 1, except that the silane-modified PE obtained in Preparation Example 1 was replaced with the silane-modified PE obtained in Preparation Example 4.

Example 5

A separator was manufactured in the same manner as in Example 1, except that the silane-modified PE obtained in Preparation Example 1 was replaced with the silane-modified PE obtained in Preparation Example 5.

Example 6

A separator was manufactured in the same manner as in Example 1, except that the silane-modified PE obtained in Preparation Example 1 was replaced with the silane-modified PE obtained in Preparation Example 6.

Experimental Example 1

A test method for each physical property measured in the present invention is as follows. When there is no separate description on a temperature, the physical properties were measured at room temperature (25 °C).

- Thickness ($\mu$m): The thickness of a separator specimen was measured using a microthickness gauge.

- Porosity (%): The porosity of a separator specimen with a radius of 25 mm was measured using a capillary porometer (PMI) in accordance with ASTM F316-03.
- Air permeability (Gurley, sec/100ml): Using a Gurley-type densometer (EGO2-5 model, Asahi Seiko), the time for passing 100 mL of air through a separator specimen with a diameter of 29.8 mm was measured at a measurement pressure of 0.025 MPa.
- Tensile strength (kgf/cm$^2$): Stress was applied to a separator specimen with a size of 20×200 mm using a tensile strength meter, and the applied stress was measured until the fracture of the specimen occurred.
- Tensile elongation (%): Using a tensile strength meter, the maximum length elongated until the specimen fractured was measured by applying a separator specimen with a size of 20×200 mm, and tensile elongation was calculated using the following equation.

$$\text{Tensile elongation } (\%) = (l_1 - l_2)/l_1 * 100$$

(In the above equation, $l_1$ is the transverse or machine direction of a specimen before elongation, and $l_2$ is the transverse or machine direction of a specimen immediately before fracture.)
- Puncture strength (gf): Using a puncture strength measuring device (KES-G5 model, KATO TECH), a force was applied to a separator specimen with a size of 100×50 mm by a stick with a diameter of 0.5 mm at a speed of 0.05 cm/sec to measure a force applied at the time point when the specimen was punctured.
- Meltdown temperature and shutdown temperature (°C): Using a thermomechanical analyzer (TMA), a force of 0.01N was applied in the machine direction (MD) and the transverse direction (TD) of a separator specimen, and the temperature was raised at a rate of 5 °C/min to measure the degree of deformation of the specimen.
- Heat shrinkage rate (%): A separator specimen with a size of 200×200 mm was left between sheets of A4 paper for 1 hour in a 130 °C oven, the lengths of the specimen contracted in the transverse direction and a machine direction were measured by cooling to room temperature, and a heat shrinkage rate was calculated using the following equation.

$$\text{Heat shrinkage rate } (\%) = (l_3 - l_4)/l_3 * 100$$

(In this equation, $l_3$ is the length of a specimen in the transverse direction or machine direction before contraction, and $l_4$ is the length of a specimen in the transverse direction or machine direction after contraction.)
- Number of surface defects (ea/m$^2$): The number (ea/m$^2$) of non-uniform microdots (surface defects), which have a significant difference from the surrounding brightness on the surface of the separator and a size of 2 mm or more was measured with the naked eye.

The physical properties of the separators manufactured according to Examples were measured. The results are shown in Table 1 below.

[Table 1]

| Classification | Example 1 | Example 2 | Example 3 | Example 4 | Example 5 | Example 6 |
|---|---|---|---|---|---|---|
| Thickness | 12 | 12 | 12 | 12 | 12 | 12 |
| Porosity | 50 | 49 | 48 | 48 | 51 | 47 |
| Air permeability | 230 | 220 | 250 | 255 | 235 | 260 |
| MD tensile strength | 2,070 | 2,130 | 2,310 | 2,356 | 2,420 | 2,504 |
| TD tensile strength | 2,010 | 2,105 | 2,230 | 2,275 | 2,340 | 2,420 |
| MD heat shrinkage rate | 9 | 8 | 8 | 9 | 5 | 8 |
| Puncture strength | 350 | 367 | 380 | 397 | 405 | 420 |
| Meltdown temperature | 200 | 210 | 215 | 210 | 205 | 220 |
| Shutdown temperature | 134 | 135 | 135 | 137 | 138 | 137 |
| Number of surface defects | 5 | 8 | 10 | 13 | 15 | 19 |

Example 7

A separator was manufactured in the same manner as in Example 5, except that the input amounts of high-density polyethylene having a weight average molecular weight (Mw) of 350,000 and a polydispersity index (Mw/Mn) of 5 and silane-modified PE were changed to 36 parts by weight and 4 parts by weight, respectively.

Example 8

A separator was manufactured in the same manner as in Example 5, except that the input amounts of high-density polyethylene having a weight average molecular weight (Mw) of 350,000 and a polydispersity index (Mw/Mn) of 5 and silane-modified PE were changed to 28 parts by weight and 12 parts by weight, respectively.

Example 9

A separator was manufactured in the same manner as in Example 5, except that the input amounts of high-density polyethylene having a weight average molecular weight (Mw) of 350,000 and a polydispersity index (Mw/Mn) of 5 and silane-modified PE were changed to 20 parts by weight and 20 parts by weight, respectively.

Example 10

A separator was manufactured in the same manner as in Example 5, except that the input amounts of high-density polyethylene having a weight average molecular weight (Mw) of 350,000 and a polydispersity index (Mw/Mn) of 5 and silane-modified PE were changed to 4 parts by weight and 36 parts by weight, respectively.

Comparative Example 1

A separator was manufactured in the same manner as in Example 5, except that the input amounts of high-density polyethylene having a weight average molecular weight (Mw) of 350,000 and a polydispersity index (Mw/Mn) of 5 and silane-modified PE were changed to 39 parts by weight and 1 part by weight, respectively.

Comparative Example 2

A separator was manufactured in the same manner as in Example 5, except that the input amounts of high-density polyethylene having a weight average molecular weight (Mw) of 350,000 and a polydispersity index (Mw/Mn) of 5 and silane-modified PE were changed to 2 parts by weight and 38 parts by weight, respectively.

Comparative Example 3

36 parts by weight of high-density polyethylene having a weight average molecular weight (Mw) of 350,000 and a polydispersity index (Mw/Mn) of 5, 4 parts by weight of the silane-modified PE obtained in Preparation Example 5, and 0.5 parts by weight of an antioxidant were mixed and put into a twin-screw extruder (inner diameter: 58 mm, L/D=56) using a quantitative feeder, and 59.5 parts by weight of paraffin oil having a kinematic viscosity at 40 °C of 70 cSt was added to a side injector. The resulting product was discharged from the twin-screw extruder into a T-die with a width of 400 mm at a screw rotation speed of 40 rpm and 200 °C and passed through a casting roll whose temperature is 40 °C, thereby manufacturing a base sheet with a thickness of 1,000 $\mu$m.
A base film was manufactured by stretching the base sheet 6 times in the machine direction (MD) using a roll stretching machine at 110 °C and stretching 7 times in the transverse direction (TD) in a tenter stretching machine at 125 °C. The base film was immersed in a dichloromethane immersion tank at 25 °C for 1 minute to extract and remove paraffin oil, immersed in an immersion tank containing a dichloromethane solution in which the concentration of dibutyltin dilaurate was adjusted to 1 wt% to apply dibutyltin dilaurate to the surface (the surface of internal and external pores) of the base film, and then the resulting base film was dried at 50 °C for 5 minutes.
The dried base film was heated to 125 °C in a tenter stretching machine, stretched 1.2 times in the transverse direction (TD), and then relaxed and heat-set to 0.9 times the size before stretching. A separator was manufactured by crosslinking the base film in a constant temperature and humidity bath at 80 °C and a humidity of 90% for 1 hour.

Comparative Example 4

As a polyolefin, high-density polyethylene (Korea Petrochemical Ind., VH035, melting point: 135 °C) having a weight average molecular weight of 300,000 was prepared, and as a diluent, liquid paraffin oil (Kukdong Oil & Chemicals, LP350, kinematic viscosity: 40cSt at 40 °C) was prepared. In addition, as an alkoxy group-containing vinyl silane, 3-acryloxypropyl trimethoxysilane (Shin-Etsu, KBM-5103) was prepared. As an initiator, 2,5-dimethyl-2,5-di(tert-butyloxy)hexane (Sigma-Aldrich, Luperox 101) was prepared.

The polyolefin and diluent were prepared at a weight ratio of 35 : 65, the alkoxy group-containing vinyl silane was prepared at 0.3 parts by weight with respect to 100 parts by weight of the total content of the polyolefin and the diluent. The initiator was prepared at 2 parts by weight with respect to 100 parts by weight of the alkoxy group-containing vinyl silane.

A polyethylene composition was prepared by putting the polyolefin, diluent, alkoxy group-containing vinyl silane, and initiator into a twin-screw extruder having LID of 56, and subjecting the composition to reaction extrusion under a temperature condition of 200 °C.

The extruded composition was passed through a die and a cooling casting roll and biaxially stretched using a tenter-type sequential stretching machine that stretches a material in the machine direction (MD) and then in the transverse direction (TD). Both an MD stretching ratio and a TD stretching ratio were set to 5.5 times. The stretching temperature was 118 °C during MD stretching, and 123 °C during TD stretching.

To extract the diluent from the sheet, dichloromethane was prepared as an organic solvent. After placing the dichloromethane in an immersion tank, the sheet was immersed in the immersion tank to extract the diluent, thereby manufacturing a silane-grafted porous membrane.

As a crosslinking catalyst, dibutyltin dilaurate was prepared, and as a solvent that dissolves the crosslinking catalyst, acetone was prepared. A 0.05 wt% crosslinking catalyst solution was prepared by dissolving the crosslinking catalyst in a solvent and placed in the immersion tank to adjust the temperature of the crosslinking catalyst solution to 45 °C. The silane-grafted porous membrane was passed through an immersion tank containing the crosslinking catalyst solution so that the crosslinking catalyst solution was applied to the silane-grafted porous membrane. Here, the time that the porous membrane stayed in the crosslinking catalyst solution immersion tank was 2 or 3 seconds. In addition, the amount of the crosslinking catalyst applied to the silane-grafted porous membrane by such a process was calculated to be 0.05 parts by weight based on 100 parts by weight of the polyolefin, diluent, and crosslinking initiator.

Subsequently, 60 °C water was applied to the silane-grafted porous membrane for 1 hour, and as an application method, a sprayer was used. Subsequently, the porous membrane was heat-set at 124 °C, thereby preparing a separator.

Comparative Example 5

A separator was manufactured in the same manner as in Comparative Example 4, except that a silane-grafted porous membrane was placed in a chamber equipped with a sprayer, and 110 °C steam was then applied instead of 60 °C water.

Experimental Example 2

A test method for each physical property measured in the present invention is as follows. When there is no separate description on a temperature, the physical properties were measured at room temperature (25 °C).

The physical properties of the separators manufactured according to Examples and Comparative Examples were measured. The results are shown in Tables 2 and 3 below.

[Table 2]

| Classification | Example 5 | Example 7 | Example 8 | Example 9 | Example 10 |
|---|---|---|---|---|---|
| Thickness | 12 | 12 | 12 | 12 | 12 |
| Porosity | 51 | 52 | 50 | 48 | 49 |
| MD tensile strength | 2,420 | 2,290 | 2,220 | 2,150 | 2,015 |
| TD tensile strength | 2,340 | 2,190 | 2,120 | 2,080 | 2,055 |
| MD tensile elongation | 82 | 92 | 94 | 95 | 98 |
| TD tensile elongation | 100 | 112 | 116 | 121 | 126 |
| MD heat shrinkage rate | 5 | 5 | 5 | 6 | 5 |
| TD heat shrinkage rate | 7 | 8 | 8 | 7 | 8 |
| Puncture strength | 405 | 365 | 360 | 355 | 345 |

(continued)

| Classification | Example 5 | Example 7 | Example 8 | Example 9 | Example 10 |
|---|---|---|---|---|---|
| Meltdown temperature | 205 | 230 | 245 | 255 | 260 |

[Table 3]

| Classification | Comparative Example 1 | Comparative Example 2 | Comparative Example 3 | Comparative Example 4 | Comparative Example 5 |
|---|---|---|---|---|---|
| Thickness | 12 | 12 | 12 | 9.5 | 9.5 |
| Porosity | 50 | 50 | 51 | 48 | 49 |
| MD tensile strength | 2,570 | 1,935 | 2,410 | 1,250 | 1,380 |
| TD tensile strength | 2,440 | 1,990 | 2,320 | 813 | 1,050 |
| MD tensile elongation | 75 | 103 | 67 | 82 | 93 |
| TD tensile elongation | 91 | 133 | 65 | 95 | 102 |
| MD heat shrinkage rate | 9 | 7 | 7 | 11 | 10 |
| TD heat shrinkage rate | 11 | 9 | 10 | 15 | 13 |
| Puncture strength | 410 | 340 | 322 | 320 | 325 |
| Meltdown temperature | 197 | 275 | 158 | 176 | 185 |

It should be understood by those of ordinary skill in the art that the above description of the present invention is exemplary, and the exemplary embodiments disclosed herein can be easily modified into other specific forms without departing from the technical spirit or essential features of the present invention. Therefore, the exemplary embodiments described above should be interpreted as illustrative in all aspects and not restrictive. For example, each component described as a single type may be implemented in a distributed manner, and components described as being distributed may also be implemented in a combined form.

The scope of the present invention is defined by the appended claims and encompasses all modifications and alterations derived from meanings, the scope and equivalents of the appended claims.

<Explanation of reference numerals>

| 100: | heating member | 200: | spraying member |
|---|---|---|---|
| 10: | base film | S: | steam |

**Claims**

1.   A method of manufacturing a separator, comprising:

(a) manufacturing a base film by extruding and stretching a composition that includes a cross linkable polyolefin in which a silane-based compound is grafted to a first polyolefin, a non-cross linkable polyolefin consisting of a second polyolefin, and a pore-forming agent;

(b) applying a crosslinking catalyst to the surface of the base film while extracting the pore-forming agent from the base film by applying a solution including the crosslinking catalyst and an extraction solvent to the base film; and

(c) crosslinking the cross linkable polyolefin while removing the extraction solvent remaining on the base film by applying heat and steam to the base film.

2. The method of claim 1, wherein the weight average molecular weights (Mw) of the first and second polyolefins are 1,000 to 300,000 and 300,000 to 2,000,000, respectively, and

the ratio of the weight average molecular weight (Mw) of the first polyolefin to that of the second polyolefin is 0.0005 to 1.

3. The method of claim 1, wherein the first and second polyolefins are each one selected from the group consisting of polyethylene, polypropylene, polybutylene, polymethylpentene, ethylene vinyl acetate, ethylene butyl acrylate, ethylene ethyl acrylate, and a combination of two or more thereof.

4. The method of claim 1, wherein the silane-based compound is an alkoxy group-containing vinyl silane.

5. The method of claim 1, wherein the content of the cross linkable polyolefin and the non-cross linkable polyolefin is 5 to 90 wt%.

6. The method of claim 1, wherein the content of the silane-based compound in the cross linkable polyolefin is 10 to 50 wt%.

7. The method of claim 1, wherein, in (c), while applying heat by contacting at least one surface of the base film with a heating member having a first temperature, steam having a second temperature is applied to at least one surface of the base film using a spraying member.

8. The method of claim 7, wherein the first temperature is 40 to 70 °C, and the second temperature is 80 to 200 °C.

9. The method of claim 7, wherein the spraying member is provided at at least one of the inside and outside of the heating member.

10. A separator manufactured by the method of any one of claims 1 to 9, wherein, at 1 hour after the initiation of (c), a meltdown temperature of the separator, which is a temperature at which the separator melts and fractures, measured by applying a force of 0.01N in the machine direction (MD) and the transverse direction (TD) of the separator using a thermomechanical analyzer (TMA) and then raising the temperature at a rate of 5 °C/min is 200 to 300 °C.

[FIG. 1]

```
┌─────────────────────────────────────────────────────────┐
│     EXTRACTION AND STRETCHING OF RAW MATERIAL            │
│                     COMPOSITION                          │
└─────────────────────────────────────────────────────────┘
                           │
                           ▼
┌─────────────────────────────────────────────────────────┐
│  EXTRACTION OF PORE-FORMING AGENT AND APPLICATION        │
│   OF CROSSLINKABLE CATALYST (SINGLE PROCESS)             │
└─────────────────────────────────────────────────────────┘
                           │
                           ▼
┌─────────────────────────────────────────────────────────┐
│        DRYING AND CROSSLINKING (SINGLE PROCESS)          │
└─────────────────────────────────────────────────────────┘
                           │
                           ▼
┌─────────────────────────────────────────────────────────┐
│                    HEAT SETTING                          │
└─────────────────────────────────────────────────────────┘
```

[FIG. 2]

(a)                                        (b)

| INTERNATIONAL SEARCH REPORT | International application No. |
|---|---|
| | **PCT/KR2022/010877** |

**A.   CLASSIFICATION OF SUBJECT MATTER**

**B01D 67/00**(2006.01)i; **B01D 71/26**(2006.01)i; **H01M 50/403**(2021.01)i; **H01M 50/417**(2021.01)i

According to International Patent Classification (IPC) or to both national classification and IPC

**B.   FIELDS SEARCHED**

Minimum documentation searched (classification system followed by classification symbols)

B01D 67/00(2006.01); B29C 48/00(2019.01); B29C 48/08(2019.01); H01M 2/16(2006.01); H01M 50/40(2021.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 분리막(separator), 폴리올레핀 (polyolefin), 가교(crosslinking), 기공형성제(pore forming agent), 스팀(steam)

**C.   DOCUMENTS CONSIDERED TO BE RELEVANT**

| Category* | Citation of document, with indication, where appropriate, of the relevant passages | Relevant to claim No. |
|---|---|---|
| Y | KR 10-2024321 B1 (LG CHEM, LTD.) 23 September 2019 (2019-09-23)<br>See claims 1 and 7; and paragraphs [0025], [0079], [0083], [0122] and [0158]-[0162]. | 1-10 |
| Y | KR 10-2021-0072674 A (W-SCOPE KOREA CO., LTD. et al.) 17 June 2021 (2021-06-17)<br>See claims 5 and 10; paragraphs [0014], [0022], [0071] and [0094]; and table 1. | 1-10 |
| Y | KR 10-2021-0001785 A (LG CHEM, LTD.) 06 January 2021 (2021-01-06)<br>See claim 1; paragraphs [0070], [0073], [0079], [0081] and [0082]; example 1; and figure 3. | 1-10 |
| Y | KR 10-2021-0092600 A (LG CHEM, LTD.) 26 July 2021 (2021-07-26)<br>See claim 1; paragraphs [0041], [0067], [0070], [0105], [0110] and [0120]-[0124]; and example 1. | 1-10 |
| A | KR 10-2019-0093178 A (LG CHEM, LTD.) 08 August 2019 (2019-08-08)<br>See entire document. | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 February 2023** | **21 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/010877**

| C. | DOCUMENTS CONSIDERED TO BE RELEVANT | |
|----|---|---|
| Category* | Citation of document, with indication, where appropriate, of the relevant passages | Relevant to claim No. |
| A | KR 10-2020-0061575 A (W-SCOPE KOREA CO., LTD.) 03 June 2020 (2020-06-03)<br>See entire document. | 1-10 |

Form PCT/ISA/210 (second sheet) (July 2022)

**INTERNATIONAL SEARCH REPORT**
Information on patent family members

International application No.

**PCT/KR2022/010877**

| Patent document cited in search report | | | Publication date (day/month/year) | Patent family member(s) | | | Publication date (day/month/year) |
|---|---|---|---|---|---|---|---|
| KR | 10-2024321 | B1 | 23 September 2019 | CN | 111372981 | A | 03 July 2020 |
| | | | | CN | 111372981 | B | 08 July 2022 |
| | | | | EP | 3715407 | A1 | 30 September 2020 |
| | | | | EP | 3715407 | A4 | 13 January 2021 |
| | | | | JP | 2021-503163 | A | 04 February 2021 |
| | | | | JP | 7024079 | B2 | 22 February 2022 |
| | | | | US | 2020-0365860 | A1 | 19 November 2020 |
| | | | | WO | 2020-050589 | A1 | 12 March 2020 |
| KR | 10-2021-0072674 | A | 17 June 2021 | EP | 3832770 | A1 | 09 June 2021 |
| | | | | JP | 2021-093353 | A | 17 June 2021 |
| | | | | JP | 7002779 | B2 | 20 January 2022 |
| | | | | KR | 10-2406237 | B1 | 09 June 2022 |
| | | | | KR | 10-2406237 | B9 | 27 December 2022 |
| KR | 10-2021-0001785 | A | 06 January 2021 | None | | | |
| KR | 10-2021-0092600 | A | 26 July 2021 | None | | | |
| KR | 10-2019-0093178 | A | 08 August 2019 | CN | 110326128 | A | 11 October 2019 |
| | | | | CN | 110326128 | B | 01 March 2022 |
| | | | | EP | 3605656 | A1 | 05 February 2020 |
| | | | | EP | 3605656 | A4 | 22 April 2020 |
| | | | | JP | 2020-511736 | A | 16 April 2020 |
| | | | | JP | 6918954 | B2 | 11 August 2021 |
| | | | | KR | 10-2248232 | B1 | 04 May 2021 |
| | | | | US | 2020-0006737 | A1 | 02 January 2020 |
| | | | | WO | 2019-151812 | A1 | 08 August 2019 |
| KR | 10-2020-0061575 | A | 03 June 2020 | KR | 10-2021-0009392 | A | 26 January 2021 |
| | | | | KR | 10-2385068 | B1 | 04 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11144700 A
- JP 11172036 A
- JP 4583532 B

- KR 1857156
- KR 1020210001785
- KR 1955911